# DEMANDE DE BREVET EUROPEEN

(11) **EP 0 692 350 A1**
(43) Date de publication de la demande: **17.01.1996**
(21) Numéro de dépôt: 95401594.7
(22) Date de dépôt: 03.07.1995
(51) Int. Cl.: B27H 1/00, B27M 3/00, B23Q 3/10

(54) **Plan modulaire d'assemblage pour la mise en forme de poutres courbes en lamellé-collé**

(30) Priorité: 06.07.1994 FR 9408330
(71) Demandeur: PAUL GAUTHIER S.A., F-56460 Serent (FR)
(72) Inventeur: Gauthier, Pierre, F-56460 Serent (FR); Gauthier, Jacques, F-56460 Serent (FR)
(74) Mandataire: Pinguet, André

(57) **Abrégé**

Plan modulaire pour l'assemblage d'équerres de serrage (2) servant à la mise en forme de poutres courbes en lamellé-collé, caractérisé en ce que ledit plan comprend au moins une table d'assemblage (1) recevant au moins une équerre de serrage (2), ladite table (1) comprend un réseau de fenêtres longitudinales (10) percées à travers l'épaisseur de ladite table, ladite au moins une équerre de serrage (2) comprenant une base (22) pourvue d'une semelle (21) incorporant des lumières longitudinales (20), des moyens de fixation démontables de manière non destructrice (12, 31) étant prévus pour fixer la semelle (21) de l'équerre de serrage (2) sur la table d'assemblage (1) à l'endroit d'au moins certaines intersections des fenêtres (10) de la table et des lumières (20) de l'équerre.

## Description

La présente invention concerne le domaine de la fabrication de poutres de bois en lamellé-collé, et en particulier de poutres courbes dont on se sert dans les structures de charpente ou encore pour l'ossature de coques de bateaux. L'invention a trait aux moyens techniques utilisés pour la fabrication de telles poutres courbes.

L'architecture de certains bâtiments de grande taille nécessite la mise en oeuvre de poutres en lamellé-collé ayant une forme autre que rectiligne, par exemple courbée pour former la voûte du bâtiment. Il est parfois nécessaire de fabriquer des poutres de plus de 40 mètres de long avec une hauteur de courbure de plus de 6 mètres.

Jusqu'à présent, la fabrication de telles poutres courbes est effectuée sur une aire de collage au sol où des lisses métalliques parallèles ou en biais sont noyées dans un massif de béton. Des équerres métalliques mobiles sont disposées sur l'aire en fonction de l'extrados de la poutre à réaliser. L'ensemble de ces équerres croise deux ou trois fois les lisses métalliques scellées dans le sol. Il suffit de souder les équerres aux lisses aux endroits où elles se croisent pour obtenir un "moule" ayant la forme et la courbure souhaitées. Les lamelles de bois sont ensuite contraintes sur les branches verticales des équerres pour donner la forme à la poutre. Trois à quatre poutres peuvent ainsi être fabriquées sur un seul "moule" constitué d'équerres disposées de façon appropriée.

Il n'existe pas de courbure ou de forme standard de poutres courbes ; celles-ci dépendent de la taille et de l'architecture du bâtiment. Par conséquent, il n'existe pas de disposition d'équerre standard qui pourra indéfiniment rester en place sur l'aire de collage. Chaque commande de poutres courbes devra répondre à une certaine courbure que n'auront certainement pas les poutres de la commande suivante. De ce fait, il est nécessaire, après chaque commande, de détruire les soudures par meulage pour libérer l'aire de collage, puis de resouder les équerres suivant une nouvelle disposition répondant aux exigences des poutres futures à fabriquer. Les soudures sont des soudures électriques qui doivent répondre à des impératifs de stabilité et de résistance, étant donné que les contraintes exercées sur la branche verticale de l'équerre par les lamelles de bois sont considérables.

L'inconvénient du système de fixation des équerres par soudage est son manque de souplesse, puisque tout changement implique la destruction des soudures. Or, les commandes de structures en lamellé-collé varient chaque jour et parfois plusieurs fois dans la même journée. Cette succession de soudage et de désoudage est un procédé lent et à la longue destructeur des lisses métalliques noyées dans le béton. Leur remplacement nécessite un travail d'enlèvement du massif de béton, de mise en place de nouvelles lisses et de coulée d'un nouveau massif de béton.

Il est connu de l'art antérieur de par le document US-A-1 862 414 un système de cintrage de pièce de bois utilisant une table dans laquelle est percé un réseau de trous s'étendant radialement à partir d'un point central. Des équerres sont déplaçables sur la table, mais uniquement radialement, en raison de la disposition radiale des trous. Ce système est uniquement adapté au cintrage des pièces de bois pour leur conférer une forme semi-circulaire. L'orientation imposée des équerres centrées sur un point unique ne permet pas la réalisation de poutres courbes en lamellé-collé ayant une courbure complexe.

Un autre document US-A-1 561 613 divulgue un plan d'assemblage dans lequel les équerres sont boulonnées en des endroits prédéfinis pour former une certaine courbure. Les équerres sont boulonnées en deux points et il n'est pas possible de modifier leur orientation. Leur disposition est directement imposée pas l'emplacement des trous de boulonnage.

Le document Halder norm + technik Vorrichtungs-System Nut-System V-40/V-70 Loch-System L-12/L-16 Basiselement d10 000/4.92, page 46, divulgue une équerre qui est boulonnée sur une base. L'équerre est déplaçable sur la base mais uniquement par translation. Il est impossible de positionner l'équerre à l'oblique des rainures de boulonnage de la base.

Un inconvénient de ces systèmes de l'art antérieur réside dans le fait que le positionnement des équerres est directement lié et imposé par la disposition des moyens de fixation prévus sur la table. Les équerres ne peuvent pas être mises en place à n'importe quel endroit de la table. La possibilité de formation de poutres courbes ayant une forme très complexe est ainsi grandement réduite.

L'invention se propose de remédier à cet inconvénient en définissant un plan d'assemblage dans lequel les équerres peuvent être assujetties sur la table en une infinité de positons, de sorte que les moyens de fixation de la table ne définissent pas une pluralité de positions discrètes. Un but de l'invention est d'allier la modularité de la technique par soudage précédemment exposée qui offre une infinité de positions pour les équerres et la non-destructivité des systèmes utilisant des tables dotées de moyens de fixation non destructifs. Par "démontage non destructif', il faut comprendre tout moyen capable de réaliser une fixation non définitive, en opposition à la soudure. Par exemple, une fixation par boulon, goupille ou même par électro-aimant répond à cette définition.

Pour ce faire, l'invention a pour objet un plan modulaire pour l'assemblage d'équerres de serrage servant à la mise en forme de poutres courbes en lamellé-collé, ledit plan comprenant au moins une table d'assemblage recevant au moins une équerre de serrage, ladite équerre de serrage étant solidaire de ladite au moins une table d'assemblage par au moins un moyen de fixation à démontage non destructif, caractérisé en ce que ladite table comprend un réseau de fenêtres longitudinales, ladite au moins une équerre de serrage comprenant une base pourvue d'une semelle incorporant des lumières longitudinales, lesdits moyens de fixation démontables de manière non destructrice étant prévus pour fixer la semelle de l'équerre de serrage sur la table d'assemblage à l'endroit d'au moins certaines intersections des fenêtres de la table et des lumières de l'équerre.

Avantageusement, les fenêtres longitudinales du réseau de la table sont percées à travers l'épaisseur de ladite table et s'étendent parallèlement sous forme de lignes discontinues de percement, alors que les lumières longitudinales de la semelle s'étendent de chaque côté de ladite base de l'équerre. De préférence, les lignes de fenêtres de la table sont séparées par une distance égale à celle séparant les lumières de la semelle. Grâce à cette disposition des fenêtres et des lumières, il est possible d'orienter l'équerre dans n'importe quelle direction sur la table d'assemblage, car les lumières croisent toujours deux fenêtres, ou au moins sont alignées dessus. Cette modularité, en plus de la possibilité de démonter les équerres sans rien détruire représente un avantage important.

Selon une autre caractéristique de l'invention, lesdits moyens de fixation comprennent des boulons coopérant à l'endroit de certaines intersections des fenêtres et des lumières avec des organes d'écrou disposés en dessous de ladite table d'assemblage. Avantageusement, lesdits organes d'écrou sont montés coulissant au droit de chaque fenêtre de la table. Ainsi, il est juste nécessaire de faire coulisser les organes d'écrou au droit des intersections des fenêtres et des lumières choisies pour recevoir les boulons d'assemblage. Cette opération s'effectue rapidement par le dessus de la table au travers des fenêtres de cette dernière.

Selon une forme de réalisation avantageuse, des rails de guidage sont prévus en-dessous de ladite table d'assemblage pour guider les organes d'écrou dans leur coulissement sous les fenêtres de la table. Lesdits rails de guidage s'étendent sensiblement sur la totalité de la longueur des lignes discontinues de fenêtres de la table. Le rail de guidage assure une triple fonction : premièrement, il permet de guider les organes d'écrou sous la table le long des fenêtres. Deuxièmement, il permet de surélever la table pour créer un espace pour le déplacement des organes d'écrou. Troisièmement, il permet de renforcer et de rigidifier la table qui n'aura par conséquent pas besoin d'être formée à partir d'une tôle de forte épaisseur. Les rails de guidage constituent dont un élément important de la structure du plan modulable de l'invention. Selon d'autres formes pratiques de l'invention, les organes d'écrou sont des patins coulissants bloqués en rotation dans leur rail respectif et comprennent chacun un alésage fileté pour recevoir lesdits boulons. La table d'assemblage est en outre pourvue d'alésages recevant, pour l'assujetissement desdits rails de guidage à la table d'assemblage, des boulons coopérant avec des écrous sous la forme de patins fixes prisonniers desdits rails de guidage. Lesdits alésages sont prévus entre chaque fenêtre d'une même ligne et aux extrémités desdites lignes de fenêtres pour isoler chaque patin coulissant dans sa fenêtre respective. La table présente une surface supérieure et ladite semelle une surface inférieure, toutes deux bosselées avec des petits reliefs saillants, pour augmenter le coefficient de frottement par glissement de l'équerre sur la table.

Enfin, lorsque le plan modulaire comprend plusieurs tables d'assemblage, ce qui sera toujours le cas en pratique, chaque table est séparée de l'autre adjacente dans le sens longitudinal des fenêtres d'une distance permettant l'extraction des patins coulissants par les extrémités des rails de guidage après démontage des patins fixes. La distance minimale correspond à la longueur d'un patin coulissant. Grâce à cette disposition, il sera possible d'extraire les patins fixes et coulissants des rails pour les nettoyer, par exemple. La fabrication de poutres de lamellé-collé mettant en oeuvre de la colle, il est possible et même probable que de la colle tombe sur la table et dans les fenêtres. Il est alors indispensable de pouvoir laver les patins coulissants pour éviter leur collage à l'intérieur de leur rail respectif.

D'autres caractéristiques et avantages ressortiront de la description détaillée qui va suivre, faite en référence aux dessins annexés et donnant à titre d'exemple non limitatif une forme de réalisation de l'invention.

Sur les dessins :
- la figure 1 est une vue en perspective d'une table d'assemblage recevant une équerre de serrage, ladite table formant tout ou partie d'un plan modulaire réalisé selon la présente invention,
- la figure 2 est une vue en perspective de dessus à une échelle agrandie d'une partie de la table d'assemblage de la figure 1 à un endroit où elle reçoit l'équerre de serrage,
- la figure 3 est une vue en coupe verticale à travers un plan modulaire réalisé conformément à la présente invention,
- la figure 4a représente la disposition des tables d'assemblage d'un plan modulaire selon l'invention, et
- la figure 4b représente la structure de la fondation destinée à recevoir le plan modulaire de la figure 4a.

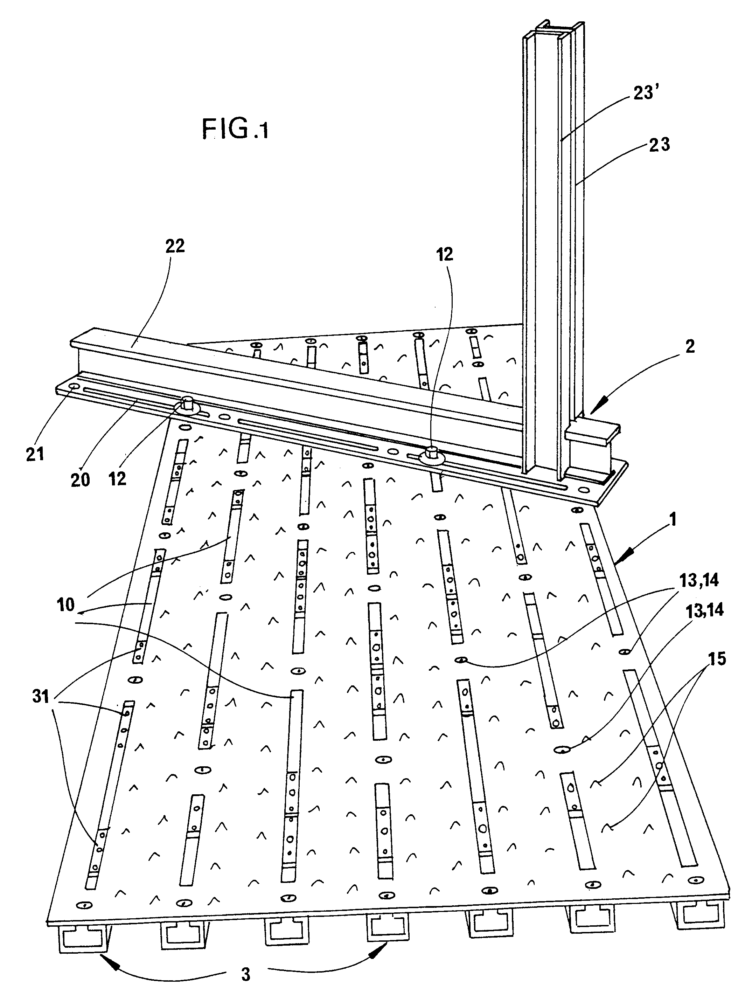

La figure 1 donne une vue d'ensemble d'une table d'assemblage 1 sur laquelle est disposée une équerre de serrage 2. Pour former un plan modulaire conforme à l'invention, il suffit de placer plusieurs tables les unes à côté des autres en fonction de la forme de la poutre courbe à réaliser. Une disposition avantageuse des tables sera décrite ci-après. Comme toutes les tables sont identiques, la description d'une seule suffira à faire comprendre l'invention.

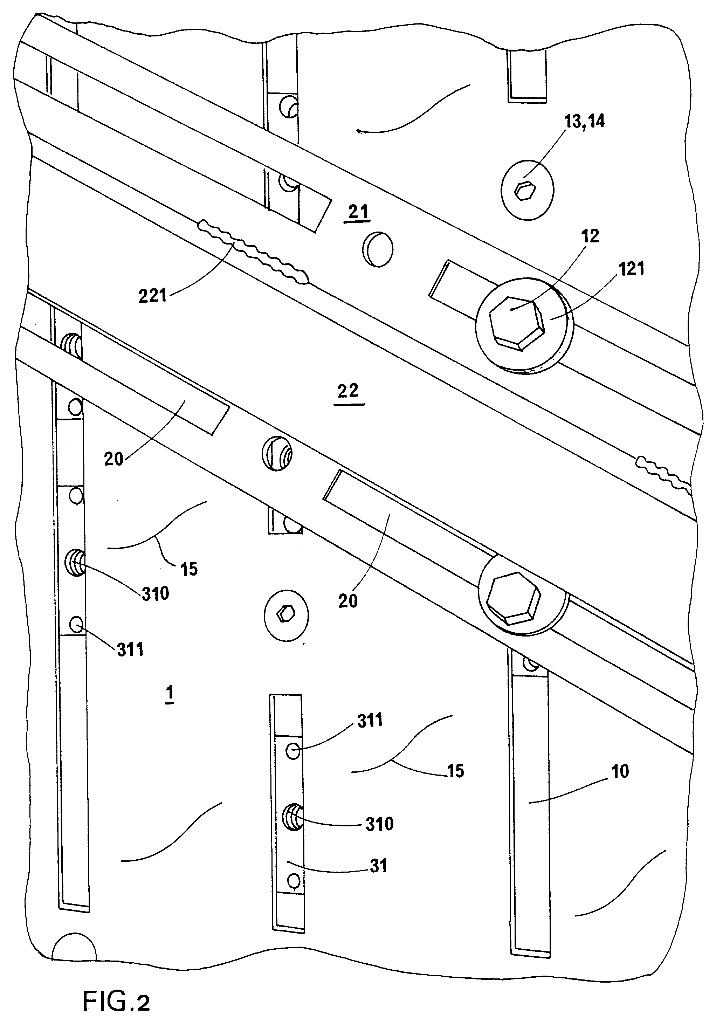

La table est réalisée à partir d'une tôle métallique de forme rectangulaire quelconque. Une dimension avantageuse se situe à environ de 2 mètres sur 2 mètres 50 pour permettre la transport des tables dans un camion classique. Une épaisseur de 5 mm est suffisante pour des raisons qui seront décrites ci-après. La surface supérieure de la table 1 est bosselée ou "larmée" et forme des petits reliefs saillants 15 pour accroître le frottement par glissement avec l'équerre (voir fig. 2).

La table 1 est percée par un certain nombre de fenêtres longitudinales 10 distribuées sur la surface de la table de manière à créer un réseau de lignes parallèles discontinues de fenêtres longitudinales 10. Selon un motif priviligié, mais non unique, les fenêtres 10 sont disposées en quinconce. La table 1 est également percée par un réseau d'alésages lisses et fraisés 13 répartis entre chaque fenêtre 10 d'une même ligne et aux extrémités de chaque ligne. Ces alésages fraisés reçoivent des boulons 14 à tête fraisée dont la fonction sera donnée ci-après.

L'équerre de serrage 2 présente une base horizontale 22 et deux branches parallèles verticales 23 et 23', comme il est d'usage dans la technique classique. Les deux branches verticales sont espacées l'une de l'autre pour permettre le passage d'une tige de serrage qui vient appuyer les lamelles de bois successives contre les branches 23, 23'. L'équerre 2 utilisée est donc du type classique, hormis qu'elle reçoit une semelle 21 soudée à la base 22 qui réalise avec sa surface inférieure, la surface de contact avec la table 1. La semelle 21 est plus large que la base 22 de sorte que de chaque côté de la base est définie une plage longitudinale. Chaque plage longitudinale est percée de lumières longitudinales 20, au nombre de trois sur la figure 1. La semelle est réalisée à partir d'une tôle de même type que la table 1 avec une épaisseur sensiblement égale. Sa surface inférieure de contact est également "larmée" de sorte que le coefficient de frottement par glissement sur la table, elle-même "larmée", est considérablement accrue.

En se référant à la figure 1, on voit que la table 1 repose sur des profilés métalliques 3 en forme de U légèrement fermé de manière à former une fente longitudinale. Les profilés s'étendent sous la table 1 avec leur fente longitudinale alignée sur les lignes de fenêtres 10. Il y a autant de profilés que de lignes de fenêtres. Ces profilés servent de rails de guidage 3 pour des organes d'écrous coulissants qui se présentent sous la forme de patins coulissants 31. Ces patins 31 sont formés à partir d'un plat métallique coupé à une largeur légèrement inférieure à la largeur de l'âme du profilé et une longueur supérieure à la largeur de l'âme du profilé. Ainsi, lesdits patins 31 peuvent coulisser dans leur rail de guidage respectif au droit des fenêtres 10 sans qu'ils ne puissent virer. Les patins sont prisonniers des rails en raison de la forme en U légèrement fermée de ces derniers.

La représentation à une échelle agrandie de la figure 2 illustre de façon plus précise la disposition et la forme des patins coulissants 31. Il s'agit d'un plat parallélipipédique dans lequel est formé un alésage fileté 310 et de deux trous secondaires 311 qui servent à la préhension du patin coulissant à travers la fenêtre 10.

Selon l'invention, les alésages filetés 310 des patins 31 sont destinés à coopérer en tant qu'écrous avec des boulons de fixation 12, qui traversent la semelle 21 et la table 1 aux endroits où les lumières 20 croisent les fenêtres 10. Du fait que le réseau de fenêtres 10 couvre la totalité de la surface de la table et que les lumières 20 de l'équerre 2 s'étendent sur une certaine longueur, il y a au moins toujours quatre endroits où les fenêtres croisent les lumières. L'intersection de ces dernières définit un logement au travers duquel on insère un boulon de fixation 12. Il n'est pas nécessaire de prévoir un boulon 12 à chaque intersection, mais quatre boulons minimum sont conseillés, deux de chaque côté de la base 22.

Du fait que les patins 31 peuvent coulisser dans les rails 3, il est toujours possible d'amener un patin 31 au droit de l'intersection d'une fenêtre et d'une lumière, n'importe où sur la table. L'équerre de serrage 2 peut donc être positionnée sur la table 1 avec n'importe quelle orientation. Avantageusement, la distance séparant les lumières 20 de l'équerre de chaque côté de la base 22 est égale à la distance séparant deux lignes de fenêtres 10. Ainsi, il est même possible de placer l'équerre avec sa base parallèle aux lignes de fenêtres.

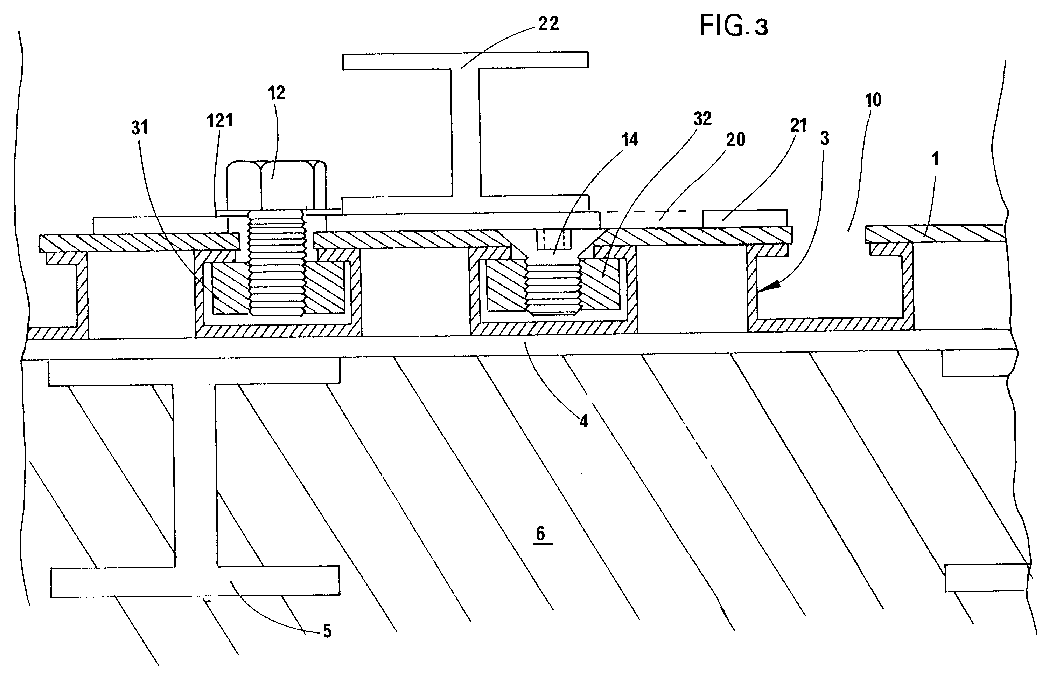

Selon une autre caractéristique de l'invention, des alésages lisses et fraisés 13 précédemment mentionnée, sont prévus dans la table 1 pour recevoir des boulons à têtes fraisées 14. Les alésages 13 et les boulons 14 sont fraisés pour ne pas faire saillie sur la table d'assemblage 1 qui doit rester parfaitement plane. Les boulons 14 servent à l'assujettissement de la table 1 et des rails 3. Pour ce faire, les boulons 14 coopèrent avec des écrous 32 (fig. 3) sous la forme de patins fixes analogues aux patins coulissants 31. Les mêmes parties peuvent d'ailleurs être utilisées pour constituer, et les patins coulissants 31, et les patins fixes 32. Les patins fixes 32 sont destinés à rester statiques et solidaires des rails lorsque la table est utilisée, mais bien entendu, ils peuvent être retirés des rails une fois leur boulon respectif 14 désengagé de leur alésage fileté 13, comme on le verra par la suite. Du fait que les alésages fraisés 13 sont prévus entre chaque fenêtre d'une même ligne et aux extrémités desdites lignes, les patins coulissants 31 ne peuvent se déplacer que sur la longueur d'un fenêtre 10. Comme on peut le voir sur les figures 1 et 2, deux patins coulissants 31 sont prévus dans chaque fenêtre 10. En effet, il faut au moins deux patins coulissants par fenêtre pour pouvoir positionner l'équerre et la fixer n'importe où sur la table. Les patins coulissants sont donc prisonniers deux à deux le long de chaque fenêtre entière (les fentes d'extrémité n'étant que de longueur moitié pour une ligne de fenêtre sur deux, comme on peut le voir sur la figure 1). Les patins fixes 32, visibles sur la figure 3, remplissent donc une double fonction : d'une part, ils servent à la fixation des rails de guidage 3 sous la table 1, et d'autre part, ils servent à compartimenter les rails 3 en emprisonnant deux patins coulissants 31 entre chaque paire de patins fixes 32.

Comme précédemment mentionné, il n'est pas nécessaire que la table présente une épaisseur de tôle particulièrement importante: 5 mm suffisent. Ceci s'explique par le fait que la table ne subit pratiquement pas les contraintes exercées lors de la mise en forme des poutres courbes. Celles-ci sont presque entièrement reprises par les profilés métalliques constituant les rails de guidage 3. Connaissant la rigidité de tels profilés, et vu le nombre de profilés par table, la rigidité de l'ensemble est assurée en grande partie uniquement par les profilés, et non par la table qui ne sert que de surface de travail équipée de moyens de préhension et de fixation. En plus de leur fonction de renforcement conférant de la rigidité, les profilés servent par nature de rails de guidage pour les patins coulissants 31.

En se référant maintenant plus particulièrement à la figure 3, on a représenté trois rails de guidage 3 en section transversale passant par un boulon 14 de fixation de la table sur les rails. Les trois rails de guidage 3 sont représentés dans trois configurations possibles : en partant de la droite de la figure, un rail 3 est vide au droit d'une fenêtre 10. C'est le cas le plus fréquent sur la totalité des fenêtres existantes de la table 1. Dans le rail du milieu, un boulon 14 à tête fraisée est engagé dans un patin maintenu ainsi fixe 32 au travers d'un alésage fraisé 13. Dans le rail de gauche, un boulon 12 de fixation d'équerre est engagée dans un patin coulissant 31 au travers d'une fenêtre 10 de la table 1 et d'une lumière 20 de l'équerre 22. En pratique, une rondelle 121 est interposée entre la tête du boulon 12 et la semelle 21. Une quatrième configuration possible du rail (non représenté) est celle dans laquelle le rail reçoit un patin coulissant 31 non assujetti à un boulon 12.

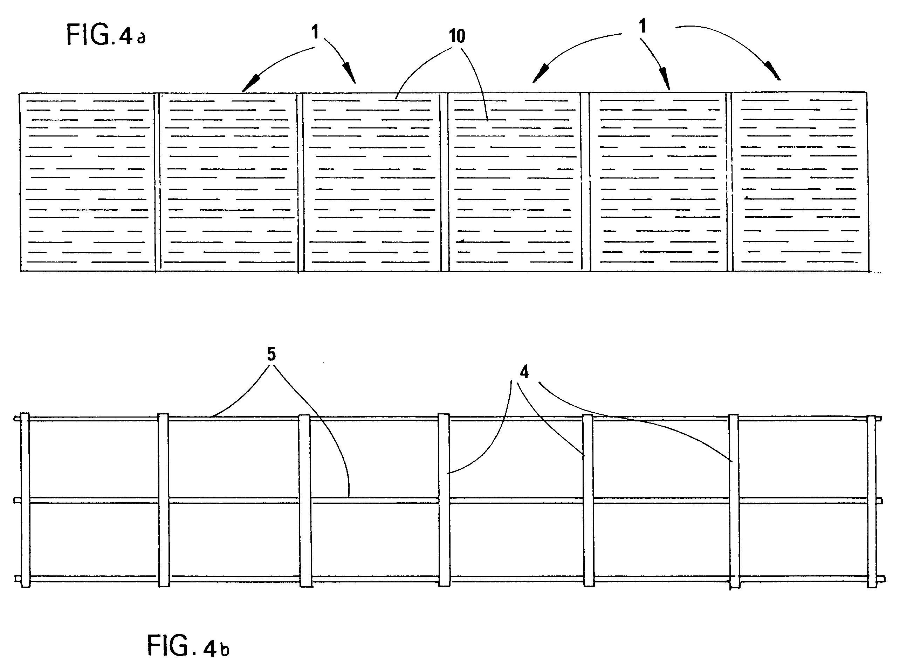

Pour créer un plan modulaire selon l'invention, il suffit de disposer un nombre suffisant de tables 1, telles que décrites ci-dessus, à la suite l'une de l'autre et/ou côte à côte. La fixation des tables au sol est nécessaire et peut se faire par tout moyen. Cependant, l'invention propose une solution astucieuse permettant de tirer profit des installations déjà existantes. Comme mentionné dans la partie introductive exposant l'état de la technique, les aires de collages classiques sont constituées de lisses métalliques noyées dans un massif de béton. En se référant aux figures 3, 4a, 4b, on voit de quelle manière les tables 1 sont fixées sur une aire de collage classique déjà existantes. Les lisses référencées 5, au nombre de trois, s'étendent parallèlement sur une grande longeur. L'invention prévoit de souder sur ces lisses des plats métalliques 4 intersectant les trois lisses de manière perpendiculaire. Les plats métalliques sont espacés les uns des autres d'une distance lègérement supérieure à la longueur des rails de guidage 3 et par conséquent des tables 1. Une explication de cet excès de longueur sera donnée ci-après. Les extrémités des rails de chaque table sont ensuite soudées sur lesdits plats métalliques 4. Les plats 4 présentent une largeur telle qu'ils est possible de souder les extrémités des rails 3 de deux tables adjacentes en laissant entre les rails des deux tables adjacentes un intervalle permettant d'extraire le patins coulissants 31 des rails, une fois les patins fixes 32 déboulonnés. Cela explique le léger excès dans la distance séparant deux plats métalliques 4. En général, les patins coulissants 31 pourront avoir une longueur de 100 mm. Il est donc indispensable de laisser un intervalle de plus de 100 mm entre chaque table. Une largeur de 150 mm pour les plats métalliques 4 convient parfaitement.

Cette caractéristique prévoyant un écart entre chaque table est particulièrement avantageuse, car elle permet l'extraction des patins coulissants 31 de leur rail respectif 3. Cela est nécessaire pour procéder au nettoyage des patins. En effet, la fabrication de poutre en lamellé-collé utilise beaucoup de colle, qui au moment du serrage des lamelles est pressée hors de la poutre, et tombe par conséquent au sol. Elle s'infiltre donc dans les fenêtres et peut encoller les patins coulissants 31 qui deviendront alors inutilisables. Un écart entre des tables permet de les extraire facilement pour les nettoyer. Pour combler l'écart entre les tables, une petite poutre peut être intercalée de façon à affleurer le plan modulaire.

Un essai de glissement d'une équerre sur la table serrée par un seul boulon 12 a permis de constater que sous un effort de traction de 1 000 kg, il n'y avait aucun déplacement quelque soit l'orientation de l'équerre.

## Revendications

**1.-** Plan modulaire pour l'assemblage d'équerres de serrage (2) servant à la mise en forme de poutres courbes en lamellé-collé, ledit plan comprenant au moins une table d'assemblage (1) recevant au moins une équerre de serrage (2), ladite équerre de serrage (2) étant solidaire de ladite au moins une table d'assemblage par au moins un moyen de fixation (12, 31) à démontage non destructif, caractérisé en ce que ladite table (1) comprend un réseau de fenêtres longitudinales (10), ladite au moins une équerre de serrage (2) comprenant une base (22) pourvue d'une semelle (21) incorporant des lumières longitudinales (20), lesdits moyens de fixation démontables de manière non destructrice (12, 31) étant prévus pour fixer la semelle (21) de l'équerre de serrage (2) sur la table d'assemblage (1) à l'endroit d'au moins certaines intersections des fenêtres (10) de la table et des lumières (20) de l'équerre.

**2.-** Plan modulaire selon la revendication 1, dans lequel les fenêtres longitudinales (10) du réseau de la table (1) sont percées à travers l'épaisseur de ladite table et s'étendent parallèlement sous forme de lignes discontinues de percement, alors que les lumières longitudinales (20) de la semelle (21) s'étendent de chaque côté de ladite base (22) de l'équerre (2).

**3.-** Plan modulaire selon la revendication 1, dans lequel les lignes de fenêtres (10) de la table (1) sont séparées par une distance égalé à celle séparant les lumières (20) de la semelle (21).

**4.-** Plan modulaire selon la revendication 1, 2 ou 3, dans lequel lesdits moyens de fixation comprennent des boulons (12) coopérant à l'endroit de certaines intersections des fenêtres (10) et des lumières (20) avec des organes d'écrou (31) disposés en dessous de ladite table d'assemblage (1).

**5.-** Plan modulaire selon la revendication 4, dans lequel lesdits organes d'écrou (31) sont montés coulissant au droit de chaque fenêtre (10) de la table (1).

**6.-** Plan modulaire selon la revendication 4 ou 5, dans lequel des rails de guidage (3) sont prévus en-dessous de ladite table d'assemblage (1) pour guider les organes d'écrou (31) dans leur coulissement sous les fenêtres (10) de la table.

**7.-** Plan modulaire selon les revendications 2 et 6, dans lequel lesdits rails de guidage (3) s'étendent sensiblement sur la totalité de la longueur des lignes discontinues de fenêtres (10) de la table (1).

**8.-** Plan modulaire selon la revendication 6 ou 7, dans lequel les organes d'écrou sont des patins coulissants (31) bloqués en rotation dans leur rail respectif (3) et comprennent chacun un alésage fileté (310) pour recevoir lesdits boulons (12).

**9.-** Plan modulaire selon la revendication 6 ou 7, dans lequel la table d'assemblage (1) est en outre pourvue d'alésages recevant, pour l'assujetissement desdits rails de guidage (3) à la table d'assemblage (1), des boulons (14) coopérant avec des écrous (32) sous la forme de patins fixes prisonniers desdits rails de guidage (3).

**10.-** Plan modulaire selon la revendication 9, dans lequel lesdits alésages (13) sont prévus entre chaque fenêtre (10) d'une même ligne et aux extrémités desdites lignes de fenêtres (10) pour isoler chaque patin coulissant (31) dans sa fenêtre respective (10).

**11.-** Plan modulaire selon l'une quelconque des revendications 1 à 10, dans lequel la table (1) présente une surface supérieure et ladite semelle (21) une surface inférieure, toutes deux bosselées avec des petits reliefs saillants (15), pour augmenter le coefficient de frottement par glissement de l'équerre (2) sur la table (1).

**12.-** Plan modulaire selon l'une quelconque des revendications 1 à 11, comprenant une pluralité de tables d'assemblage (1), dans lequel chaque table (1) est séparée de l'autre adjacente dans le sens longitudinal des fenêtres (10) d'une distance permettant l'extraction des patins coulissants (31) par les extrémités des rails de guidage (3) après démontage des patins fixes (32).

**13.-** Plan modulaire selon l'une quelconque des revendications 1 à 12, dans lequel lesdits rails de guidage (3) sont fixés au sol.
